# EUROPÄISCHE PATENTANMELDUNG

(11) **EP 0 858 734 A1**
(43) Veröffentlichungstag der Anmeldung: **19.08.1998**
(21) Anmeldenummer: 98102340.1
(22) Anmeldetag: 11.02.1998
(51) Int. Cl.: A01F 15/14

(54) **Rundballenpresse**

(30) Priorität: 14.02.1997 DE 19705582
(71) Anmelder: Deere & Company, Moline, Illinois 61265-8098 (US)
(72) Erfinder: Geiser, Jens, 38173 Dettum (DE)
(74) Vertreter: Feldmann, Bernhard

(57) **Zusammenfassung**

Herkömmlich werden Ballen (28) in einer Rundballenpresse (10) lediglich mit Garn umwickelt, so daß deren Enden lose bleiben. Soweit es bereits vorgesehen ist, die losen Enden durch Klebebänder zu sichern oder in den Ballen (28) einzudrücken, ist dies mit einem hohen Aufwand verbunden.

Es wird eine Rundballenpresse (10) vorgeschlagen, die einen Nutformer (38) aufweist, der in Anlage an dem sich drehenden Ballen (28) eine Nut (50) oder Rille in den Ballenumfang einarbeitet, in die die losen Garnenden so eingezogen werden können, daß sie darin kraftschlüssig gehalten werden.

Rundballenpressen (10) werden in der Landwirtschaft verwendet.

## Beschreibung

Die Erfindung betrifft eine Rundballenpresse mit einem Preßraum, der auf seinem Umfang im wesentlichen von Preßelementen umgeben wird, und mit einem Bindesystem, das Garn auf die Umfangsfläche eines in dem Preßraum gebildeten Ballen aufwickelt.

In herkömmlicher Weise werden Rundballen in einer Rundballenpresse mit Garn umwickelt, um zu verhindern, daß das gewickelte Erntegut nach dem Verlassen des Preßraums auseinander fällt. Das Garn wird lediglich auf die Umfangsfläche des Ballens aufgewickelt, so daß das Garnende nicht befestigt wird und nur lose aufliegt. Nach dem Auswerfen des Ballens aus dem Preßraum kann es daher geschehen, daß sich je nach der Drehrichtung des Ballens das Garnende abwickelt und der Ballen auseinander fällt, bzw. das lose Garnende bei der weiteren Handhabung des Ballens stört.

Die DE-A-41 32 664 offenbart zum Festlegen der Garnenden zwei Vorrichtungen, mit denen das Garnende auf dem Ballen befestigt werden kann, nämlich einmal, indem man es in die Stirnseiten eindrückt und einmal indem man es mit einem Klebeband sichert.

Das der Erfindung zugrunde liegende Problem wird darin gesehen, daß diese Art der Garnendenbefestigung relativ aufwendig ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise bedarf es weder eines Klebebandes noch einer Vorrichtung zum Eindrücken des Garns in die Stirnseite, sondern das Garn wird einfach in einer Nut kraftschlüssig gehalten. Eine derartige Nut ist einfach einzubringen, zumal der Zugang zu der Umfangsfläche an verschiedenen Stellen des Preßraums unproblematisch ist. Eine Nut oder Rille kann auf verschiedene Weise mit einem Nutformer, z. B. mit einem einfachen Flacheisen, einem Blech oder dergleichen hergestellt werden. Eine Nuttiefe von ca. 60 - 70 mm erscheint ausreichend, um die Garnenden zu halten. Die Nuttiefe ist auch in Zusammenhang mit der Länge des eingezogenen Abschnitts zu sehen, wobei ca. eine Garnwicklung in der Nut erzeugt werden sollte.

Den Nutformer in Bezug auf den Preßraum verstellbar auszugestalten bzw. anzubringen, ist aus mehreren Gründen von Vorteil. Zum einen kann ein zurückziehbarer Nutformer den Ballen nicht vom Kern her in mehrere Scheiben trennen, wobei diese Gefahr nicht überall besteht, sondern vor allem bei Rundballenpressen mit veränderlicher Preßkammer und wenn nach dem Einbringen der Nut nicht mehr mit einer Vermengung des Guts zu rechnen ist. Zudem wird auf diese Weise der Bewegungswiderstand des Ballens gering gehalten und die Gefahr von Verstopfungen besteht nicht oder kaum. Außerdem kann das Garn in mehr als einer Lage in der Nut abgelegt werden, da nach der ersten Umdrehung der Nutformer das Garn dann nicht mehr berührt und folglich nicht zerstört. Es kann sich also empfehlen, den Nutformer nur dann in den Ballen einzudrücken, wenn und solange eine Nut gedrückt oder geschnitten wird.

Die Nut oder Rille kann zuverlässig und eng begrenzt erzeugt werden, wenn hierzu ein Messer verwendet wird. Ein solches Messer ist insbesondere bei bröckelndem Stroh oder Silage wegen der Gutbeschaffenheit von Vorteil. Ein ortsfest auf einem beweglichen Träger befestigtes Messer ist kostengünstig herzustellen und kann sicher in dem Preßraum positioniert werden.

Wenn der Bewegungswiderstand infolge des Messers weiter verringert werden soll, kann das Messer auch als eine drehende Schneidscheibe ausgebildet werden, die in die Umfangsfläche des Ballens eingedrückt wird. Unter ganz besonderen Umständen, z. B. bei einer hohen Verdichtung der Oberfläche kann das Messer auch angetrieben werden und die Nut einfräsen.

Wenn auch das Garn z. B. vonhand in die Nut eingelegt werden könnte, ist es doch zur Reduzierung der Bindezeit vorteilhafter, das Garn dadurch in die Nut einzuführen, daß es mittels einer ohnehin vorhandenen Garnführung dorthin geleitet wird. Beispielsweise können ein oder mehrere Garnführungen in der Form von Ösen oder Rohren - allgemein als Bindearm bezeichnet - zum Abschluß des Bindevorgangs derart geschwenkt oder geschoben werden, daß sie unmittelbar vor der Nut zu stehen kommen. Allerdings können auch von der Bindevorrichtung getrennte Finger, Mitnehmer oder dergleichen vorgesehen werden, die das Garn in die Nut einführen, während sich der Bindearm in einer anderen Stellung befindet.

Um den Bindevorgang gezielt zu beenden und die Menge des in der Nut zu haltenden Garns bestimmen zu können, ist ein Messer an der Bindevorrichtung oder dem Nutformer vorgesehen, das abhängig von bestimmten Parametern gesteuert werden kann.

Die Bewegung des Ballens während des Wickelvorgangs wird am wenigsten beeinflußt, wenn der Nutformer durch eine Öffnung zwischen zwei Preßelementen eingeführt wird, da dort eine sichere Mitnahme des Ballens gewährleistet ist.

Bei Pressen mit Preßelementen z. B. aus Kettenstäben, oder bei vollflächigen oder dicht nebeneinander befindlichen Riemen ist die Einführung des Nutformers dennoch möglich, wenn dies durch den Einlaß für das Gut geschieht.

Das Einbringen des Nutformers, d. h. dessen Stellbewegung kann auf vielfältige Weise geschehen, wobei es am einfachsten ist, den Nutformer auf einem Schwenkarm zu lagern und z. B. mittels eines Elektro- oder Hydraulikmotors zu verschwenken. Die Länge des Hebelarms kann sich nach der verfügbaren Motorkraft oder dem Motordrehmoment richten. Andererseits kann auch eine geradlinige oder sonstige Führung vorgesehen werden, auf der der Nutformer in den Preßraum gleitet, bzw. bewegt wird.

Die Eingriffszeit des Nutformers wird optimiert und automatisiert, wenn dessen Stellbewegung über eine Steuervorrichtung gesteuert wird, die z. B. von dem Ballendurchmesser ausgeht und den Nutformer kurz vor Erreichen des maximalen oder gewünschten Ballendurchmesser einführt.

Die auf den Nutformer einwirkende Kraft verringert sich und der Schnitt zum Erreichen der spalt- oder V-förmigen Nut wird schärfer, wenn das Messer eine gebogene und insbesondere mit Zähnen versehene Schneidkante aufweist.

Ein sicherer Halt des Garns wird erreicht, wenn die Spannung auf das Garn beim Ende des Bindevorgangs noch erhöht wird, so daß das Garn tief in die Nut hineingezogen wird.

Eine besondere und sehr einfach auszuführende Art eines sich drehenden Messers ist darin zu sehen, daß auf einem Preßelement selbst - bei einer Festkammerpresse - oder auf einer Preßelemente tragenden Rolle - bei einer Rundballenpresse mit einem Preßraum variabler Größe - eine Schneidscheibe z. B. exzentrisch aufgesetzt wird, die in den Preßraum bewegbar ist. Vorteilhafterweise wird diese Schneidscheibe in ein Messer und einen Träger zerlegt, so daß das Messer zu Schärfzwecken demontiert werden kann.

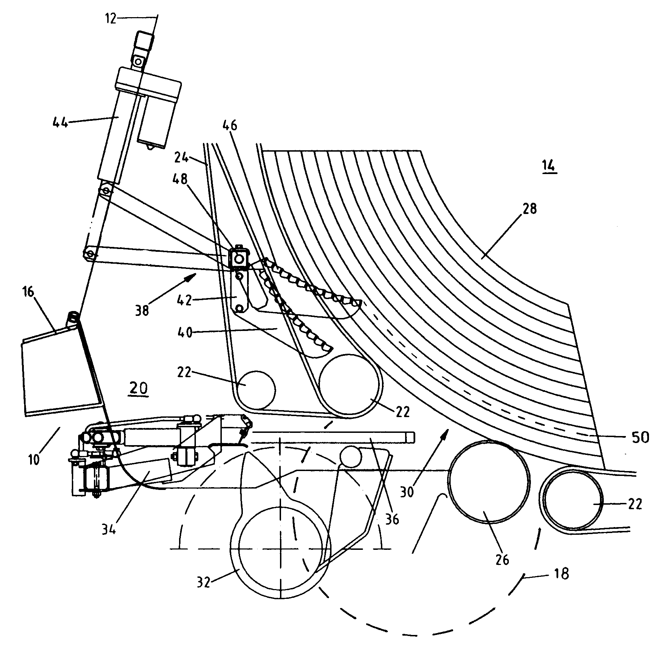

In der Zeichnung ist ein nachfolgend näher beschriebenes Ausführungsbeispiel der Erfindung dargestellt.

Die Zeichnung zeigt einen Ausschnitt einer erfindungsgemäßen Rundballenpresse 10 mit einem Rahmen 12, der einen Preßraum 14 in sich birgt, über eine Deichsel 16 an ein nicht gezeigtes Zugfahrzeug, z. B. einen Ackerschlepper, angeschlossen ist und sich über Räder 18 auf dem Boden abstützt.

Der Rahmen 12 wird beiderseits von sich in der Fahrtrichtung erstreckenden, vertikalen Seitenwänden 20 begrenzt, zwischen denen die Deichsel 16 gehalten ist.

Zwischen den Seitenwänden 20 erstrecken sich in diesem Ausführungsbeispiel eine Vielzahl von Rollen 22, über die Preßelemente 24 in der Form von Riemen geführt sind, wie dies bekannt ist. In dem mit Blick auf die Zeichnung unten und an der Rundballenpresse 10 unten links gelegenen Bereich befindet sich ein Einlaß 30 zwischen den Preßelementen 24 und einer Walze 26, auf der sich ein in dem Preßraum 14 gebildeter Ballen 28 abstützen kann. Durch diesen Einlaß 30 wird mittels einer nicht gezeigten Pick-up und einem unterschlächtigen Förderer 32 vom Boden aufgenommenes Erntegut dem Preßraum 14 zugeführt, wo es zu dem rund-zylindrischen Ballen 28 geformt wird.

Die Ausbildung einer Rundballenpresse 10 mit als Riemen ausgebildeten Preßelementen 24 ist nicht zwingend. Vielmehr kann der Preßraum 14 auch von drehbaren Rollen umfangsmäßig begrenzt werden, deren Drehachse im wesentlichen auf einer Kreislinie liegt. Außerdem können Stabkettenförderer als Preßelemente verwendet werden, die auf einer vorgegebenen starren oder veränderlichen Bahn bewegt werden. Schließlich können auch Mischformen von Riemen, Stabkettenförderern und Rollen verwendet werden.

Zwischen der Deichsel 16 und dem unter ihr befindlichen Förderer 32 ist eine Bindevorrichtung 34 vorgesehen, mit deren Hilfe nicht gezeigtes Garn von einer Vorratsrolle entnommen und an den Umfang des Ballens 28 herangebracht wird, so daß dieser es während seiner Drehung mitnehmen kann. Die Bindevorrichtung 34 enthält in herkömmlicher Weise wenigstens eine Garnführung 36 in der Art eines Bindearms, der in einer im wesentlichen horizontalen Ebene verstellbar ist. Die Garnführung 36 kann aus einer dem Ballen 28 abgelegenen Stellung in eine diesem zugelegene Stellung gebracht werden und nimmt am Ende des Bindevorgangs vorteilhafterweise eine Stellung in der Ballenmitte ein, wobei auch jede andere Stellung, z. B. an der Seite, möglich ist. Die Bindevorrichtung 34 kann auch in einem anderen, z. B. oberen oder rückwärtigen Bereich der Rundballenpresse 10 vorgesehen werden.

Der Bindevorrichtung 34 ist ferner eine nicht dargestellte Schneidvorrichtung zugeordnet, die das Garn zwischen der Vorratsrolle und dem Ballen 28 trennt, wenn genug Garn aufgewickelt ist. Diese Schneidvorrichtung ist herkömmlich derart ausgebildet und angeordnet, daß der Garnstrang bzw. die Garnstränge am Ende des Bindevorgangs zwischen einen Anschlag und eine Schneidplatte eingeführt und zu einem bestimmbaren Zeitpunkt durchtrennt werden. Dieser Zeitpunkt kann bei der Verwendung der erfindungsgemäßen Rundballenpresse so gesteuert werden, daß die Durchtrennung erst dann erfolgt, wenn genügend Garn auf dem Ballen 28 gesichert ist.

Die Preßelemente 24 erstrecken sich nur über einen Teil des Abstandes zwischen den Seitenwänden 20, so daß auf einer einzigen Rolle 22 mehrere als Riemen ausgebildete Preßelemente 24 nebeneinander angeordnet werden, die einen geringen Spalt, z. B. 5 bis 10 mm, zwischen sich belassen.

Oberhalb der Deichsel 16 befindet sich in dem dargestellten Ausführungsbeispiel ein Nutformer 38, der ein Messer 40, einen Schwenkarm 42 und einen Motor 44 enthält.

Der Nutformer 38 ist verstellbar ausgebildet und kann aus einer Stellung außerhalb des Preßraums 14 (untere Stellung) in eine Stellung innerhalb des Preßraums 14 (obere Stellung) und umgekehrt gebracht werden, in der er eine Nut 50 oder Rille in den Ballen 28 eindrückt oder einschneidet. Die Tiefe der Nut 50 kann z. B. bis 70 mm betragen. Die Stellbewegung des Nutformers 38 wird von einer nicht dargestellten Vorrichtung automatisch oder willkürlich gesteuert.

Das Messer 40 ist in diesem Fall starr mit dem Schwenkarm 42 verbunden und weist eine bogenförmige Schneidkante 46 mit einer Vielzahl von Zähnen, Zacken oder dergleichen auf, die den Schneideffekt erhöhen. Die Biegung ist derart ausgebildet, daß die untere Kante des Messers 40 zuerst in den mit Blick auf die Zeichnung entgegen dem Uhrzeigerdrehsinn drehenden Ballen 28 eingreift, während die obere Kante in dem Bereich zwischen zwei Preßelementen 24 zurückbleibt. Das Messer 40 ist mittels des Schwenkarms 42 auf einer sich zwischen den Seitenwänden 20 erstreckenden Lagerachse 48 vertikal schwenkbar gehalten. Das Messer 40 ist lösbar auf den Schwenkarm 42 montiert und kann zu Schärf- oder Einstellzwecken demontiert bzw. montiert werden.

Sobald das Messer 40 vom Umfang her in den sich drehenden Ballen 28 hineingedrückt wird, bildet sich die Nut 50 oder Rille von geringer Weite, in der die losen Enden des Garns aufgenommen werden können. Je nach der Ausbildung des Messers 40 bzw. dessen Schneidkante 46 kann es sich um einen scharfkantigen Schnitt oder um eine V-förmige Nut 50 handeln. Während die erste Form einen höheren Kraftschluß auf das Garn erzeugt, ist der Eintritt des Garns in die Nut 50 mit der zweiten Form einfacher.

In dem Fall, daß lose Garnenden an mehreren Stellen entlang des Ballenumfangs befestigt werden sollen und somit mehrere Nuten 50 vorgesehen werden müssen, sind auch mehrere mit einem Abstand nebeneinander angeordnete Messer 40 zu verwenden. Die Messer 40 können speziell für diesen Zweck hergestellt werden oder Messer 40 sein, wie sie in Schneidwerken von Rundballenpressen 10 oder Ladewagen ohnehin verwendet werden. Dabei ist darauf zu achten, daß das Gut über die Tiefe der ca. bis 70 mm tiefen Nut hinaus noch miteinander verwoben ist, da sich das Gut ansonsten in Streifen zwischen den Nuten von dem Ballenkern löst.

Zur Verstellung des Messers 40 ist der zweischenklige Schwenkarm 42 vorgesehen, der einerseits mit dem Motor 44 und andererseits mit dem Messer 40 verbunden ist. Die Länge der Hebelarme des Schwenkarms 42 kann der vorhandenen Kraft und dem Hub des Motors 44 angepaßt werden. Während bei dem gezeigten Ausführungsbeispiel der an dem Messer 40 angreifende Schenkel des Schwenkarms 42 relativ kurz ist, kann er nach einer nicht dargestellten Ausführungsform auch drei- oder viermal so lange sein. Außerdem kann das Messer 40 auch direkt auf der Schwenkachse 48 befestigt sein und von dem Schwenkarm 42 verschwenkt werden, d. h. selbst auf einer Kreisbahn schwenken. Insbesondere dann, wenn mehrere nebeneinander gelegene Messer 40 verwendet werden, können diese mittels eines einzigen Schwenkarms 42, der an allen Messern 40 drehfest angreift, verstellt werden. Der Schwenkarm 42 muß so bemessen oder angeordnet werden, daß er den Lauf der Preßelemente 24 nicht behindert. Durch die Änderung der relativen Stellung des Schwenkarms 42 gegenüber dem Messer 40 kann auf den Hub des Motors 44 Rücksicht genommen bzw. der Schwenkweg eingestellt werden.

Der Motor 44 kann elektrisch wie auch hydraulisch antreibbar ausgebildet werden. Es ist auch denkbar, anstatt eines Motors 44 ein mechanisches Gestänge oder einen Seilzug zu verwenden, mit dessen Hilfe der Schwenkarm 42 bzw. das Messer 40 verstellt wird. Vorteilhafterweise wird ein Motor 44 in Elektrobauweise verwendet, weil dieser am einfachsten steuerbar ist. Nach der Zeichnung wird ein Elektromotor mit einer Gewindespindel 52 verwendet, die die Verbindung zu dem Schwenkarm 42 herstellt. Es ist zu erkennen, daß das Messer 40 in den Ballen 28 eindringt, wenn die Gewindespindel 52 ausfährt und sich aus diesem zurückzieht, wenn die Gewindespindel 52 eingefahren wird.

In einem nicht dargestellten Ausführungsbeispiel wird das Messer 40 nicht zwischen zwei nebeneinander liegenden Preßelementen 24 sondern durch den Einlaß 30 in den Preßraum eingeführt und zwar auf einer geradlinigen Führung, z. B. einer Schiene.

Ausgehend von dem vorbeschriebenen Aufbau ergibt sich folgende Funktion der erfindungsgemäßen Rundballenpresse.

Sobald in dem Preßraum 14 ein Ballen 28 die gewünschte oder maximale Größe erreicht hat, wird die Bindevorrichtung 34 automatisch oder manuell in Betrieb gesetzt, und die Garnführung 36 führt das Garnende oder die Garnenden an den sich drehenden Ballen 28 heran, der diese mitnimmt und somit den Wickelprozeß einleitet. Während des Wickelvorgangs bewegt sich die Garnführung 36 entlang der Längsachse des Ballens 28 und nimmt schließlich eine Stellung ein, in der sie verharrt und der Nut 50 gegenüberliegt, es sei denn separate Mittel führen das Garn zu der Nut 50. Nachdem das Garn in die Nut 50 eingetreten ist, wird es von dem sich weiterhin drehenden Ballen 28 tief in die Nut 50 eingezogen, und zwar insbesondere dann, wenn die Garnspannung erhöht wird. Wenn Garn in ausreichendem Maß in die Nut eingeführt ist, wird die Schneidvorrichtung der Bindevorrichtung 34 betätigt und das Garn durchtrennt. Endlich wird der Ballen 28 aus dem Preßraum 14 ausgestoßen.

Es kann je nach der Art des Preßguts erforderlich oder wenigstens von Vorteil sein, wenn das Gut seitlich der Nut 50 mit mehreren Garnsträngen gesichert wird, und zwar, damit es im Wandbereich der Nut 50 nicht ausfranst und damit auch dann noch eine ausreichende Bindung gewährt ist, wenn die der Nut 50 naheliegenden Garnstränge über die Seitenkante in die Nut 50 hineingleiten.

Vorzugsweise wird die Nut 50 in der Mitte des Ballens 28 eingearbeitet, so daß die der Nut 50 benachbarten Garnstränge nicht über die Seitenfläche des Ballens abrutschen oder die Nut 50 seitlich ausbricht.

## Patentansprüche

1. Rundballenpresse (10) mit einem Preßraum (14), der auf seinem Umfang im wesentlichen von Preßelementen (24) umgeben wird, und mit einer Bindevorrichtung (34), die Garn auf die Umfangsfläche eines in dem Preßraum (14) gebildeten und sich drehenden Ballens (28) aufwickelt, gekennzeichnet durch wenigstens einen Nutformer (38), der in die Umfangsfläche des Ballens (28) eine Nut (50) zur Aufnahme eines Abschnitts des Garns einbringt.

2. Rundballenpresse nach Anspruch 1, dadurch gekennzeichnet, daß der Nutformer (38) in Bezug auf den Preßraum (14) verstellbar ist.

3. Rundballenpresse nach Anspruch 1 oder 2, dadurch gekennzeichnet, daß der Nutformer (38) wenigstens ein Messer (40) enthält, das insbesondere lösbar ortsfest auf einem Träger befestigt ist.

4. Rundballenpresse nach Anspruch 1 oder 2, dadurch gekennzeichnet, daß der Nutformer (38) ein drehbar auf einem Träger befestigtes Messer (40) enthält.

5. Rundballenpresse nach einem oder mehreren der vorherigen Ansprüche, dadurch gekennzeichnet, daß die Bindevorrichtung (34) eine bewegliche Garnführung (36) enthält, die zur Beendigung des Bindevorgangs eine Stellung im Bereich der Nut (50) einnimmt.

6. Rundballenpresse nach einem oder mehreren der vorherigen Ansprüche, dadurch gekennzeichnet, daß die Bindevorrichtung (34) oder der Nutformer (38) eine Schneidvorrichtung zum Trennen des Garns aufweist.

7. Rundballenpresse nach einem oder mehreren der vorherigen Ansprüche, dadurch gekennzeichnet, daß der Nutformer (38) zwischen als Riemen oder Walzen ausgebildeten Preßelementen (24) in den Preßraum (14) geschoben oder geschwenkt wird.

8. Rundballenpresse nach einem oder mehreren der vorherigen Ansprüche, dadurch gekennzeichnet, daß der Nutformer (38) durch einen Einlaß (30) des Preßraums (14) für das Preßgut in den Preßraum (14) geschoben oder geschwenkt wird.

9. Rundballenpresse nach einem oder mehreren der vorherigen Ansprüche, dadurch gekennzeichnet, daß die Bewegung des Nutformers (38) mittels einer Steuervorrichtung erfolgt, die den Nutformer (38) insbesondere abhängig von einem erfaßten Ballendurchmesser in Eingriff mit dem Ballen (28) bringt.

10. Rundballenpresse nach einem oder mehreren der vorherigen Ansprüche, dadurch gekennzeichnet, daß das starre Messer (40) eine gebogene und insbesondere geriffelte Schneidkante (46) aufweist.

11. Rundballenpresse nach einem oder mehreren der vorherigen Ansprüche, dadurch gekennzeichnet, daß die Spannung des Garns während dessen Eintritt in die Nut (50) erhöht wird.

12. Rundballenpresse nach einem oder mehreren der vorherigen Ansprüche, dadurch gekennzeichnet, daß das Messer (40) auf einem Preßelement (24) oder auf einer ein oder mehrere Preßelemente (24) führenden Rolle befestigt und in den Preßraum (14) bewegbar ausgebildet bzw. angeordnet ist.

13. Rundballenpresse nach einem oder mehreren der vorherigen Ansprüche, dadurch gekennzeichnet, daß seitlich der Nut 50) mehr als eine Garnwicklung aufgelegt wird.
